# FASCICULE DE BREVET EUROPEEN

(11) **EP 0 916 469 B1**
(45) Date de publication et mention de la délivrance du brevet: **12.03.2003**
(21) Numéro de dépôt: 98402816.7
(22) Date de dépôt: 13.11.1998
(51) Int. Cl.: B29C 45/16, B65D 47/20

(54) **Organe réducteur d'écoulement, notamment pour un récipient contenant un produit cosmétique et procédé de fabrication**
Durchflussreduzierungsorgan, insbesondere für einen ein kosmetisches Produkt enthaltenden Behälter und Verfahren zur Herstellung
Flow reducer device, especially for a container holding a cosmetic product and method for producing

(30) Priorité: 14.11.1997 FR 9714306
(43) Date de publication de la demande: 19.05.1999
(73) Titulaire: L'OREAL, 75008 Paris (FR)
(72) Inventeur: Baudin, Gilles, 95330 Domont (FR)
(74) Mandataire: Leszczynski, André

(56) Documents cités:
- WO-A-97/31837
- WO-A-98/02361
- DE-U- 29 508 151

## Description

La présente invention concerne la distribution d'un produit fluide, par exemple un produit cosmétique ou alimentaire.

L'invention se rapporte plus particulièrement à une tête de distribution comportant un embout en matière plastique rigide ou semi-rigide et un organe réducteur d'écoulement en une matière plastique élastiquement déformable, assujetti à l'embout.

On connaît par le brevet britannique GB-1 046 518 ou le modèle d'utilité allemand DE 29508151 une tête de distribution pour un récipient à paroi souple, comportant un embout rigide surmonté par une membrane obturatrice réalisée en caoutchouc ou en élastomère, pourvue d'une fente réalisée par découpe et dont les bords sont jointifs au repos.

Lorsque l'utilisateur exerce une pression sur la paroi du récipient, les bords de la fente s'écartent sous la poussée du produit.

Une telle tête de distribution ne permet pas un dosage aisé du produit.

En effet, pour extraire le produit, l'utilisateur doit appuyer fortement sur la paroi du récipient et la distribution du produit s'effectue d'une façon brusque lorsque la fente s'ouvre.

L'utilisateur peut alors être surpris et cesser trop tardivement de presser le récipient, de sorte qu'une quantité excessive de produit peut être distribuée.

La société demanderesse a décrit dans sa demande de brevet français FR-A-2 745 552 une tête de distribution comportant un organe réducteur d'écoulement réalisé en une matière plastique élastiquement déformable, pourvu d'une fente à bords non jointifs, laquelle n'est donc jamais totalement fermée et permet de doser plus aisément le produit tout en empêchant celui-ci de s'écouler hors ,du récipient lorsque ce dernier est au repos.

La présente invention vise notamment à permettre la fabrication d'un tel organe réducteur d'écoulement d'une manière sure et à un faible coût.

L'invention vise également à améliorer la fiabilité de l'organe réducteur d'écoulement, à accroître le confort d'utilisation et à rendre les dispositifs de conditionnement et de distribution équipés d'un tel organe réducteur d'écoulement encore plus attrayants pour le consommateur.

L'invention a ainsi pour objet un nouveau procédé pour réaliser une tête de distribution d'un produit fluide, comportant un embout de distribution en matière plastique rigide ou semi-rigide et un organe réducteur d'écoulement en matière thermoplastique élastiquement déformable assujetti à l'embout, cet organe présentant au moins une fente dont les bords sont aptes à s'écarter sous l'effet de la poussée du produit lors de la distribution de ce dernier, ce procédé étant caractérisé par le fait qu'il comporte l'étape consistant à réaliser l'organe réducteur d'écoulement par moulage par injection à partir d'un ou plusieurs points d'injection situés d'un même côté de la fente ou de part et d'autre de celle-ci.

Dans une mise en oeuvre particulière du procédé, l'organe réducteur d'écoulement peut être surmoulé sur l'embout, c'est-à-dire que le moulage de l'organe réducteur d'écoulement est effectué en reprise sur une machine différente de celle qui a servi à mouler l'embout.

Dans une variante de mise en oeuvre du procédé, l'organe réducteur d'écoulement est réalisé par bi-injection avec l'embout, dans une même machine comportant plusieurs buses alimentant les différents systèmes de canaux du moule.

Dans une mise en oeuvre préférée de l'invention, la fente est unique et bordée par un bourrelet de matière et l'injection de la matière thermoplastique élastiquement déformable s'effectue par un orifice dont l'axe est situé à proximité de ou de préférence dans un plan médian perpendiculaire à la direction longitudinale de la fente ou en variante par deux orifices dont les axes sont situés à proximité de ou de préférence dans ce même plan médian mais de part et d'autre de la fente, le ou les axes du ou desdits orifices débouchant de préférence à la périphérie de l'organe réducteur d'écoulement.

L'invention s'applique plus particulièrement, mais non exclusivement, à la réalisation lors du moulage d'une fente à bords non jointifs.

De façon surprenante, un tel procédé permet d'obtenir un organe réducteur d'écoulement sans défauts de moulage notables et sans zone de fragilité préjudiciable à son fonctionnement, la fente étant particulièrement régulière malgré sa faible largeur.

La fente étant obtenue lors du moulage, il n'est pas nécessaire de procéder à une opération de découpe de la matière constituant l'organe réducteur d'écoulement pour réaliser la fente, contrairement à ce qui est décrit dans la demande DE-A-29508151 précitée.

L'invention a encore pour objet une tête de distribution d'un produit fluide comportant un embout de distribution et un organe réducteur d'écoulement élastiquement déformable assujetti à l'embout, cet organe présentant au moins une fente dont les bords sont aptes à s'écarter sous l'effet de la poussée du produit lors de la distribution de ce dernier, cette tête de distribution étant caractérisée par le fait que l'organe réducteur d'écoulement est réalisé par moulage par injection par le procédé précité et présente ainsi la trace d'un ou plusieurs points d'injection d'un même côté de la fente ou de part et d'autre de celle-ci.

Dans une réalisation préférée, la fente est bordée par un bourrelet de matière.

L'invention a encore pour objet un dispositif de conditionnement et de distribution d'un produit fluide, comportant un récipient et une tête de distribution telle que précitée.

D'autres caractéristiques et avantages de la présente invention ressortiront à la lecture de la description détaillée qui va suivre, d'un exemple de réalisation non limitatif de l'invention, et à l'examen du dessin annexé sur lequel :
- la figure 1 représente en vue de dessous la tête de distribution, le couvercle étant en position ouverte,
- la figure 2 est une vue en coupe schématique selon le trait de coupe II-II de la figure 1,
- la figure 3 est une vue en coupe schématique selon le trait de coupe III-III de la figure 1,
- la figure 4 est une vue agrandie représentant un détail de réalisation,
- la figure 5 est une vue illustrant la circulation des flux de matière lors du moulage, et
- la figure 6 représente l'organe réducteur d'écoulement durant la distribution du produit.

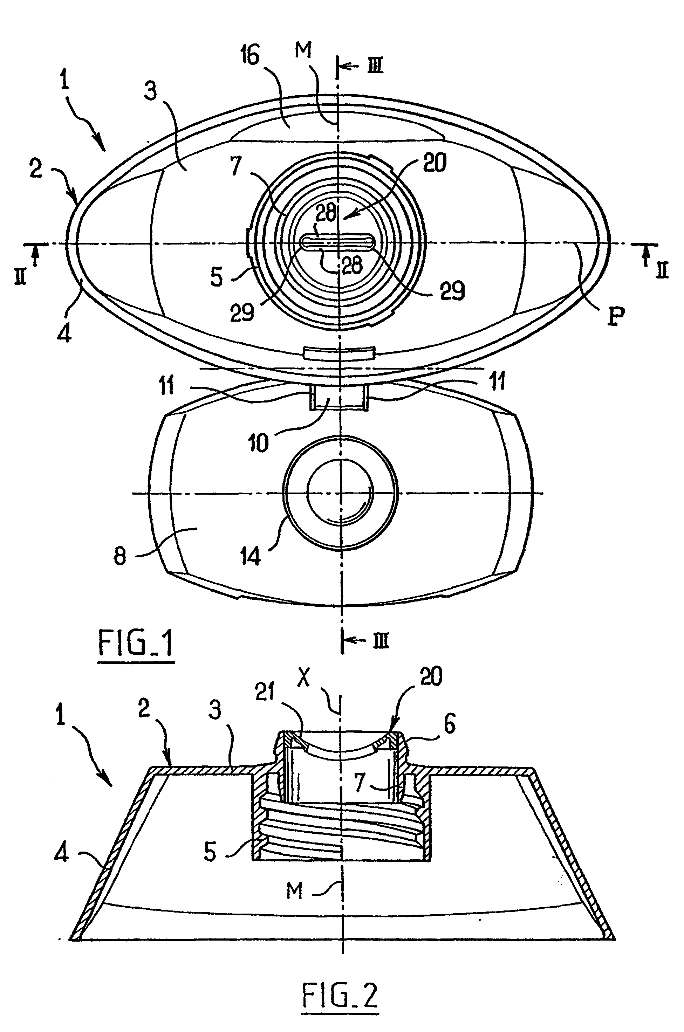

La tête de distribution 1 représentée sur les figures 1 à 3 est destinée à être fixée à un récipient, de préférence à paroi souple, contenant un produit fluide, par exemple un shampooing ou un gel moussant pour la douche.

Ce produit peut présenter une viscosité comprise par exemple entre 0,6 Pa.s et 10 Pa.s.

La tête de distribution 1 comporte un corps 2 et un couvercle 8 pouvant pivoter sur ce corps 2 entre une position d'ouverture et une position de fermeture.

Le corps 2 comporte un embout de distribution 6 à sa partie supérieure, cet embout 6 étant supporté par une jupe de montage 5, elle-même entourée par une jupe extérieure 4 ayant une forme adaptée à venir dans le prolongement de la paroi du récipient lorsque la tête de distribution 1 est fixée sur celui-ci.

La jupe extérieure 4 se raccorde à la jupe de montage-5 par une paroi 3, plane et perpendiculaire à l'axe X, ayant en vue de dessus une forme oblongue, allongée dans la direction de l'axe géométrique de pivotement du couvercle 8.

Dans l'exemple considéré, le récipient présente un col fileté extérieurement et la jupe de montage 5 est filetée intérieurement pour se visser sur celui-ci.

L'embout 6 se prolonge à l'intérieur de la jupe de montage 5 pour former une lèvre annulaire d'étanchéité 7, conformée pour s'appliquer sur la surface radialement intérieure du col du récipient.

Dans l'exemple de réalisation décrit, le couvercle 8 est réalisé d'un seul tenant par moulage avec le corps 2 et il est relié à ce dernier par une charnière-film 9.

Plus particulièrement, cette charnière-film 9 est réalisée de part et d'autre d'une lame de rappel 10 dont les côtés 11 sont libres par rapport au couvercle 8 et au corps 2 et dont les extrémités sont articulées respectivement sur le couvercle 8 et sur le corps 3 par des charnières-films 12,13.

La lame 10 présente une forme générale coudée tendant à rappeler le couvercle dans sa position d'ouverture, de façon connue en soi.

Le couvercle 8 8 est muni sur sa face intérieure d'une lèvre annulaire d'étanchéité 14 destinée à s'appliquer sur la surface radialement extérieure de l'embout 6, avec une friction suffisante pour maintenir le couvercle en position de fermeture.

La surface radialement extérieure de l'embout 6 est légèrement conique pour favoriser le centrage de la lèvre d'étanchéité 14 lorsque le couvercle est rabattu sur le corps 2.

Un renfoncement 16 est réalisé sur la jupe extérieure 4 du corps 2 du côté opposé à la charnière-film 9 pour permettre à l'utilisateur de prendre appui par un doigt sous le couvercle et le soulever.

Le corps 2 et le couvercle 8 peuvent être réalisés par injection en toute matière thermoplastique rigide ou semi-rigide telle que par exemple du polyéthylène ou du polypropylène.

Dans l'exemple décrit, la tête de distribution est destinée à être vissée sur le col d'un récipient mais, dans une variante non représentée, on peut réaliser la fixation de la tête de distribution par encliquetage.

On peut encore réaliser le récipient, le corps 2 de la tête de distribution et le couvercle 8 d'un seul tenant par un procédé d'injection soufflage ou d'extrusion soufflage.

L'embout 6 6 est muni à son extrémité supérieure d'un organe réducteur d'écoulement 20 réalisé dans un matériau thermoplastique élastomère, par exemple un mélange de polypropylène et de copolymère bloc styrène-éthylène-butylène-styrène.

L'organe réducteur d'écoulement 20 comporte une membrane souple 21, ayant une mémoire de forme, concave vers l'extérieur lorsqu'elle est au repos.

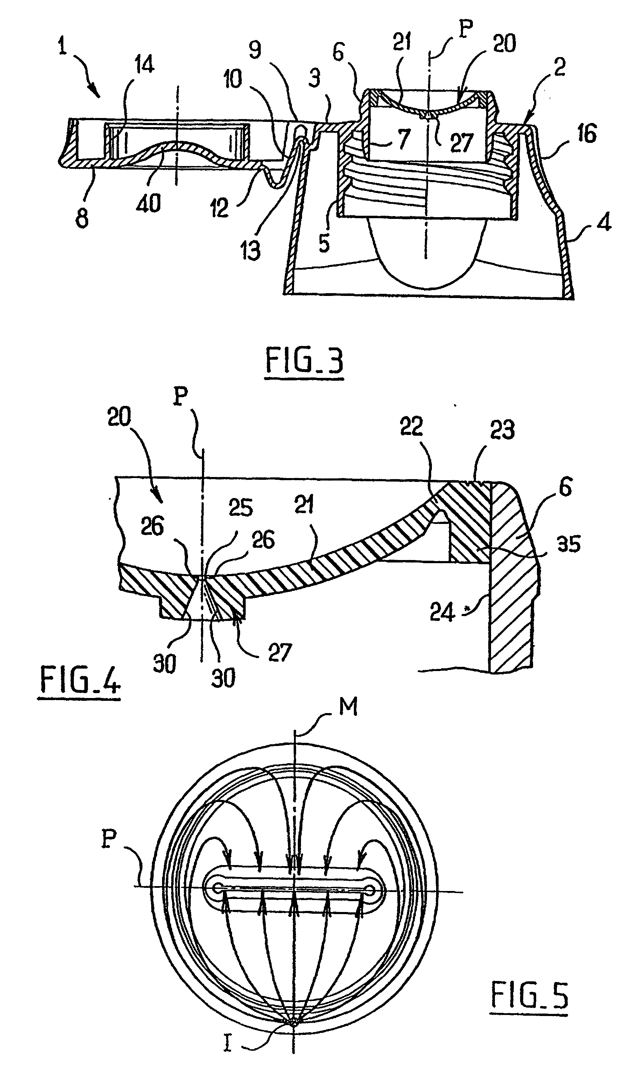

Cette membrane 21 se raccorde à sa périphérie, par une zone annulaire amincie 22, à une couronne 35 assujettie par sa surface radialement extérieure à la surface 24 radialement intérieure de l'embout 6, comme on peut le voir précisément sur la figure 4.

L'organe réducteur d'écoulement 20 est pourvu d'une fente 25, réalisée lors du moulage pour permettre la distribution du produit.

Cette fente 25 est délimitée latéralement par deux bords 26 rectilignes, non jointifs dans l'exemple décrit, s'étendant parallèlement à un plan P perpendiculaire au plan de coupe de la figure 3 et confondu avec le plan de coupe de la figure 2.

La fente 25 est bordée, en outre, sur la face intérieure de la membrane 21 par un bourrelet de matière 27 dont l'épaisseur est sensiblement double de l'épaisseur moyenne de la membrane 21.

La membrane 21 présente, au niveau de la zone amincie 22, une épaisseur à peu près moitié moindre que son épaisseur moyenne, ce qui facilite sa déformation vers l'extérieur sous l'effet de la poussée du produit.

Le bourrelet 27 comporte, comme on peut le voir sur la figure 1, deux portions parallèles 28 qui longent les bords de la fente 25, raccordées par deux portions d'extrémité 29 qui présentent chacune une forme sensiblement demi-circulaire.

Ces portions d'extrémité 29 empêchent, de par leur forme, la formation d'une amorce de déchirure dans le prolongement de la fente 25.

Les faces en regard 30 des portions parallèles 28 sont inclinées par rapport au plan P et convergent l'une vers l'autre en direction de la fente 25.

Dans l'exemple décrit, les faces 30 sont planes et inclinées entre elles de 45°.

La largeur de la fente 25, au repos, est comprise entre 5/100 mm et 1 mm et de préférence entre 5/100 mm et 0,25 mm.

Dans l'exemple de réalisation décrit, la largeur de la fente 25 est égale à 15/100 mm environ.

La longueur de la fente 25 peut être comprise par exemple entre 0,2 et 2 cm.

Les dimensions de la fente 25 au repos sont choisies de manière à empêcher sensiblement tout écoulement de produit sous l'effet de la gravité, même lorsque le récipient est retourné et que la tête de distribution est dirigée vers le bas.

Le moulage de l'organe réducteur d'écoulement 20 s'effectue après avoir moulé le corps 2 et le couvercle 8, par surinjection sur l'embout 6, la matière thermoplastique élastomère étant injectée dans le moule par un orifice d'injection dont l'axe est contenu dans un plan médian M perpendiculaire au plan P précité.

La matière utilisée pour réaliser l'organe réducteur d'écoulement est physiquement et chimiquement compatible avec la matière ayant servi à réaliser l'embout 6, de manière à former une liaison solide.

On a matérialisé sur la figure 5 l'écoulement de la matière dans le moule durant le moulage.

Le point d'injection I se situe au niveau de la couronne 35, dans le plan médian M.

Il a été constaté, de façon inattendue, que la matière élastomère thermoplastique se plaquait parfaitement contre les parois du moule, et plus particulièrement contre les parois formant l'empreinte de la fente, malgré l'obstacle que constitue ces parois, l'orientation de ces dernières incitant plutôt l'homme du métier à réaliser l'injection en un point d'injection situé dans l'alignement de la fente 25.

La zone du moule située diamétralement à l'opposé du point d'injection I est remplie en dernier par la matière thermoplastique, sans toutefois qu'il ne se forme une zone de fragilité notable à ce niveau.

On remarquera à l'examen de la figure 4 que l'on peut observer, sur l'organe réducteur d'écoulement une fois démoulé, la trace 23 de l'orifice d'injection à la surface de la couronne 35 par laquelle la membrane 21 se raccorde à l'embout 6.

Le fonctionnement de l'organe réducteur d'écoulement 20 est le suivant.

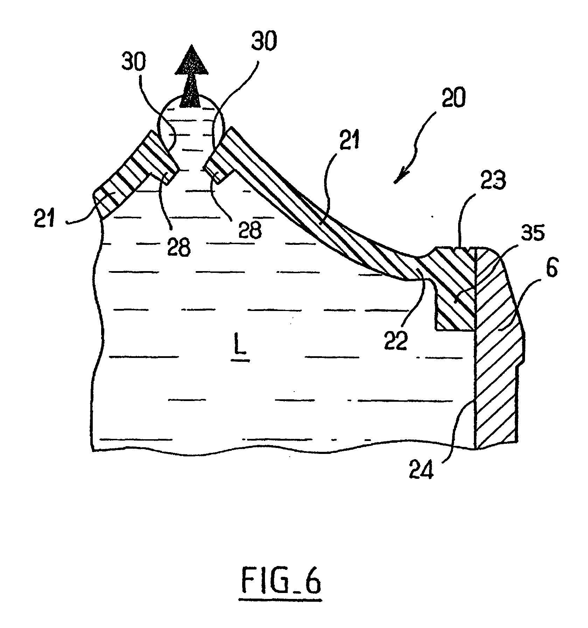

Lorsque l'utilisateur presse la paroi du récipient, la membrane 21 se déforme vers l'extérieur, sous l'effet de la poussée du produit L, et les bords de la fente 25 s'écartent, comme illustré sur la figure 6.

Lorsque l'utilisateur relâche le récipient, la fente 25 retourne à sa forme initiale, tout en restant ouverte, ce qui permet une reprise d'air.

Par ailleurs, le couvercle 8 comporte sur sa face intérieure un bossage 40, lisse, conformé pour épouser la forme de la concavité de la membrane 21, une fois rabattu sur le corps 2.

On évite ainsi la présence d'un volume d'air au-dessus de la membrane 21 lorsque le couvercle 8 est en position de fermeture, qui pourrait entraîner sinon une dégradation d'un résidu éventuel de produit présent à la surface de la membrane 21 ou son durcissement en séchant, lequel pourrait gêner le bon fonctionnement ultérieur de l'organe réducteur d'écoulement.

Par ailleurs, le corps 2 et le couvercle 8 sont réalisés dans l'exemple décrit dans une matière translucide ayant une couleur différente de celle servant à réaliser l'organe réducteur d'écoulement 20.

Ce dernier reste donc apparent lorsque le couvercle 8 8 est fermé, ce qui ajoute à l'esthétique de l'ensemble.

L'invention n'est naturellement pas limitée à l'exemple de réalisation qui vient d'être décrit.

En particulier, l'injection de la matière thermoplastique dans le moule pour réaliser l'organe réducteur d'écoulement 20 peut s'effectuer par exemple en deux points d'injection, l'un correspondant au point d'injection I précité, et l'autre étant symétrique du premier par rapport au plan P.

On notera également que, bien que les meilleurs résultats soient obtenus lorsque le ou les points d'injection I se situent dans le plan médian M précité, on a obtenu des résultats satisfaisants lorsque le ou les points d'injection se situaient dans un plan passant par le milieu de la fente et faisant un angle inférieur ou égal à 10, 20 ou 30° avec le plan médian M (0° correspondant à un plan confondu avec le plan médian M).

## Revendications

1. Procédé pour réaliser une tête de distribution d'un produit fluide, comportant un embout de distribution (6) en matière thermoplastique rigide ou semi-rigide et un organe réducteur d'écoulement en matière plastique élastiquement déformable assujetti à l'embout, cet organe présentant au moins une fente dont les bords sont aptes à s'écarter sous l'effet de la poussée du produit lors de la distribution de ce dernier, ce procédé étant **caractérisé par le fait qu'**il comporte l'étape consistant à réaliser l'organe réducteur d'écoulement (20) par moulage par injection à partir d'un ou plusieurs points d'injection (I) situés d'un même côté de la fente (25) ou de part et d'autre de celle-ci.

2. Procédé selon la revendication 1, **caractérisé par le fait que** ledit organe réducteur d'écoulement (20) est surmoulé sur ledit embout (6) ou réalisé par bi-injection avec ce dernier.

3. Procédé selon la revendication 1 ou 2, **caractérisé par le fait que** ladite fente (25) est unique et bordée par un bourrelet de matière (27) et **par le fait que** l'injection de la matière thermoplastique élastiquement déformable s'effectue par un orifice dont l'axe est situé à proximité de ou de préférence dans un plan médian (M) perpendiculaire à la direction longitudinale de la fente (25) ou par deux orifices dont les axes sont situés à proximité de ou de préférence dans ce même plan médian (M) mais de part et d'autre de la fente, le ou les axes du ou desdits orifices débouchant de préférence à la périphérie de l'organe réducteur d'écoulement.

4. Procédé selon l'une quelconque des revendications 1 à 3, **caractérisé par le fait que** les bords de la fente sont non jointifs au repos.

5. Tête de distribution d'un produit fluide, comportant un embout de distribution et un organe réducteur d'écoulement élastiquement déformable assujetti à l'embout, cet organe présentant au moins une fente dont les bords sont aptes à s'écarter sous l'effet de la poussée du produit lors de la distribution de ce dernier, **caractérisée par le fait que** ledit organe réducteur d'écoulement (20) est réalisé par moulage par injection et présente la trace (23) d'un ou plusieurs points d'injection d'un même côté de la fente (25) ou de part et d'autre de celle-ci.

6. Tête de distribution selon la revendication 5, **caractérisée par le fait que** ledit organe réducteur d'écoulement (20) comporte une membrane souple (21) présentant à sa périphérie une zone amincie (22).

7. Tête de distribution selon la revendication 5, **caractérisée par le fait que** ladite membrane (21) présente au repos une forme concave vers l'extérieur.

8. Tête de distribution selon la revendication 6 ou 7, **caractérisée par le fait que** ladite zone amincie (22) présente une épaisseur sensiblement moitié moindre que l'épaisseur moyenne de la membrane (21).

9. Tête de distribution selon l'une quelconque des revendications 5 à 8, **caractérisée par le fait que** ladite fente (25) est bordée par un bourrelet de matière (27).

10. Tête de distribution selon la revendication 9, **caractérisée par le fait que** ledit bourrelet (27) est réalisé sur la face intérieure de l'organe réducteur d'écoulement (20) et présente des bords dont les faces en regard (30) convergent en direction de ladite fente (25).

11. Tête de distribution selon la revendication 9 ou 10, **caractérisée par le fait que** ledit bourrelet (27) présente au voisinage de chaque extrémité axiale de la fente (25) une forme sensiblement demi-circulaire.

12. Tête de distribution selon l'une quelconque des revendications 6 à 8 et l'une quelconque des revendications 9 à 11, **caractérisée par le fait que** ledit bourrelet (27) présente une épaisseur sensiblement double de l'épaisseur moyenne de ladite membrane (21).

13. Tête de distribution selon l'une quelconque des revendications 5 à 12, **caractérisée par le fait que** les bords de la fente sont non jointifs au repos.

14. Tête de distribution selon la revendication 13, **caractérisée par le fait que** la largeur d'ouverture de la fente, au repos, est comprise entre 5/100 mm et 1 mm.

15. Tête de distribution selon l'une quelconque des revendications 5 à 14, **caractérisée par le fait que** ledit organe réducteur d'écoulement présente la trace (23) d'un point d'injection dans un plan passant par le milieu de la fente et faisant avec le plan médian (M) perpendiculaire à la direction longitudinale de la fente un angle inférieur ou égal à 30°.

16. Tête de distribution selon l'une quelconque des revendications 5 à 15, **caractérisée par le fait que** ledit organe réducteur d'écoulement présente la trace de deux points d'injection dans un plan passant par le milieu de la fente et faisant avec le plan médian (M) perpendiculaire à la direction longitudinale de la fente un angle inférieur ou égal à 30°, lesdits points d'injection étant disposés de part et d'autre de la fente.

17. Tête de distribution selon l'une quelconque des revendications 5 à 16, **caractérisée par le fait qu'**elle comporte un couvercle pivotant (8) muni sur sa face intérieure d'un bossage lisse (40) adapté à venir au contact de l'organe réducteur d'écoulement (20) lorsque le couvercle est fermé.

18. Tête de distribution selon la revendication 17, **caractérisée par le fait que** l'organe réducteur d'écoulement (20) et le couvercle sont de couleurs différentes et **par le fait que** le couvercle est réalisé dans une matière plastique translucide laissant apparaître l'organe réducteur d'écoulement lorsque le couvercle est fermé.

19. Dispositif de conditionnement et de distribution d'un produit fluidé, comportant un récipient et une tête de distribution telle que définie dans l'une quelconque des revendications 5 à 18.

## Claims

1. A method of making a dispenser head for dispensing a fluid, the head including a dispenser endpiece (6) of rigid or semi-rigid thermoplastic material and a flow reducer member of elastically deformable thermoplastic material secured to the endpiece, said member having at least one slot whose edges are suitable for moving apart under the effect of thrust from the fluid while it is being dispensed, the method being **characterized by** the fact that it includes the step consisting in making the flow reducer member (20) by injection molding from one or more injection points (I) situated on one or both sides of the slot (25).

2. A method according to claim 1, **characterized by** the fact that said flow reducer member (20) is overmolded onto said endpiece (6) or is made by dual injection therewith.

3. A method according to claim 1 or 2, **characterized by** the fact that there is only one slot (25), which slot is bordered by a bead of material (27), and by the fact that the elastically deformable thermoplastic material is injected via an orifice whose axis is situated close to, or preferably in, a midplane (M) perpendicular to the longitudinal direction of the slot (25) or by two orifices having axes situated close to, or preferably in, said midplane (M) but on opposite sides of the slot, the axis(es) of said orifice(s) preferably opening out into the periphery of the flow reducer member.

4. A method according to any one of claims 1 to 3, **characterized by** the fact that the edges of the slot do not touch at rest.

5. A dispenser head for dispensing a fluid, the head comprising a dispenser endpiece and an elastically deformable flow reducer member secured to the endpiece, said member having at least one slot whose edges are suitable for moving apart under the effect of thrust from the fluid while it is being dispensed, the head being **characterized by** the fact that said flow reducer member (20) is made by injection molding and presents traces (23) of one or more injection points on one or both sides of the slot (25).

6. A dispenser head according to claim 5, **characterized by** the fact that the flow reducer member (20) comprises a flexible membrane (21) having a thin zone (22) at its periphery.

7. A dispenser head according to claim 5, **characterized by** the fact that said membrane (21), when at rest, presents a shape that is concave towards the outside.

8. A dispenser head according to claim 6 or 7, **characterized by** the fact that the thickness of said thin zone (22) is substantially half the mean thickness of the membrane (21).

9. A head according to any one of claims 5 to 8, **characterized by** the fact that said slot (25) is bordered by a bead of material (27).

10. A dispenser head according to claim 9, **characterized by** the fact that said bead (27) is made on the inside face of the flow reducer member (20) and presents edges whose facing faces (30) converge towards said slot (25).

11. A dispenser head according to claim 9 or 10, **characterized by** the fact that said bead (27) is substantially semicircular in shape in the vicinity of each axial end of the slot (25).

12. A dispenser head according to any one of claims 6 to 8 and any one of claims 10 to 12, **characterized by** the fact that the thickness of said bead (27) is substantially twice the mean thickness of said membrane (21).

13. A dispenser head according to any one of claims 5 to 12, **characterized by** the fact that the edges of the slot do not touch at rest.

14. A dispenser head according to claim 13, **characterized by** the fact that the open width of the slot at rest lies in the range 0.05 mm to 1 mm.

15. A dispenser head according to any one of claims 5 to 14, **characterized by** the fact that said flow reducer member has traces (23) of an injection point in a plane passing through the middle of the slot and at an angle less than or equal to 30° to the midplane (M) perpendicular to the longitudinal direction of the slot.

16. A dispenser head according to any one of claims 5 to 15, **characterized by** the fact that said flow reducer member has traces of two injection points in a plane passing through the middle of the slot and making an angle less than or equal to 30° with the midplane (M) perpendicular to the longitudinal direction of the slot, said injection point being disposed on either side of the slot.

17. A dispenser head according to any one of claims 5 to 16, **characterized by** the fact that it includes a pivoting cap (8) provided on its inside face with a smooth bulge (40) suitable for coming into contact with the flow reducer member (20) when the cap is closed.

18. A dispenser head according to claim 17, **characterized by** the fact that the flow reducer member (20) and the cap are of different colors, and by the fact that the cap is made of a translucent plastics material allowing the flow reducer member to be visible when the cap is closed.

19. A device for packaging and dispensing a fluid, the device comprising a receptacle and a dispenser head as defined in any one of claims 5 to 18.

## Patentansprüche

1. Verfahren zur Herstellung eines Abgabekopfs für ein fließfähiges Produkt, umfassend einen Abgabeaufsatz (6) aus starrem oder halbstarrem thermoplastischen Werkstoff und ein an dem Aufsatz angebrachtes Strömungsreduzierungsorgan aus elastisch verformbarem Kunststoff, wobei dieses Organ mindestens einen Schlitz aufweist, dessen Ränder geeignet sind, sich unter der Wirkung des Schubs des Produkts bei dessen Abgabe voneinander zu entfemen, wobei dieses Verfahren **dadurch gekennzeichnet ist, dass** es den Schritt umfasst, der darin besteht, dass das Strömungsreduzierungsorgan (20) durch Spritzgießen von einer oder von mehreren Einspritzstellen (I) aus, die auf einer gemeinsamen Seite des Schlitzes (25) oder zu beiden Seiten von diesem gelegen sind, hergestellt wird.

2. Verfahren nach Anspruch 1, **dadurch gekennzeichnet, dass** das Strömungsreduzierungsorgan (20) auf den Aufsatz (6) aufgegossen wird oder durch Bi-Injektion mit diesem hergestellt wird.

3. Verfahren nach Anspruch 1 oder 2, **dadurch gekennzeichnet, dass** ein einziger Schlitz (25) vorgesehen ist und von einem Materialwulst (27) umrandet ist und dass die Einspritzung des elastisch verformbaren thermoplastischen Materials über eine Öffnung stattfindet, deren Achse in Nähe von oder vorzugsweise in einer zur Längsrichtung des Schlitzes (25) senkrechten Mittelebene (M) gelegen ist, oder über zwei Öffnungen, deren Achsen in Nähe von oder vorzugsweise in dieser selben Mittelebene (M), jedoch zu beiden Seiten des Schlitzes gelegen sind, wobei die Achse oder die Achsen der oder dieser Öffnungen vorzugsweise am Umfang des Strömungsreduzierungsorgans ausmünden.

4. Verfahren nach einem der Ansprüche 1 bis 3, **dadurch gekennzeichnet, dass** die Ränder des Schlitzes im Ruhezustand nicht aneinanderstoßend sind.

5. Abgabekopf für ein fließfähiges Produkt, umfassend einen Abgabeaufsatz und ein an dem Aufsatz angebrachtes elastisch verformbares Strömungsreduzierungsorgan, wobei dieses Organ mindestens einen Schlitz aufweist, dessen Ränder dafür geeignet sind, sich unter der Wirkung des Schubs des Produkts bei dessen Abgabe voneinander zu entfernen, **dadurch gekennzeichnet, dass** das Strömungsreduzierungsorgan (20) durch Spritzgießen hergestellt ist und die Spur (23) einer oder mehrerer Einspritzstellen auf einer gemeinsamen Seite des Schlitzes (25) oder zu beiden Seiten von diesem aufweist.

6. Abgabekopf nach Anspruch 5, **dadurch gekennzeichnet, dass** das Strömungsreduzierungsorgan (20) eine biegsame Membran (21) aufweist, die an ihrem Umfang eine verdünnte Zone (22) aufweist.

7. Abgabekopf nach Anspruch 5, **dadurch gekennzeichnet, dass** die Membran (21) im Ruhezustand eine nach außen konkave Form besitzt.

8. Abgabekopf nach Anspruch 6 oder 7, **dadurch gekennzeichnet, dass** die verdünnte Zone (22) eine Dicke besitzt, die im Wesentlichen um die Hälfte kleiner als die mittlere Dicke der Membran (21) ist.

9. Abgabekopf nach einem der Ansprüche 5 bis 8, **dadurch gekennzeichnet, dass** der Schlitz (25) von einem Materialwulst (27) umrandet ist.

10. Abgabekopf nach Anspruch 9, **dadurch gekennzeichnet, dass** der Wulst (27) auf der Innenseite des Strömungsreduzierungsorgans (20) gebildet ist und Ränder aufweist, deren einander zugewandten Seiten (30) in Richtung des Schlitzes (25) konvergieren.

11. Abgabekopf nach Anspruch 9 oder 10, **dadurch gekennzeichnet, dass** der Wulst (27) in Nähe jedes axialen Endes des Schlitzes (25) im Wesentlichen eine Halbkreisform besitzt.

12. Abgabekopf nach einem der Ansprüche 6 bis 8 und einem der Ansprüche 9 bis 11, **dadurch gekennzeichnet, dass** der Wulst (27) eine Dicke besitzt, die im Wesentlichen das Doppelte der mittleren Dicke der Membran (21) ist.

13. Abgabekopf nach einem der Ansprüche 5 bis 12, **dadurch gekennzeichnet, dass** die Ränder des Schlitzes im Ruhezustand nicht aneinanderstoßend sind.

14. Abgabekopf nach Anspruch 13, **dadurch gekennzeichnet, dass** die Öffnungsbreite des Schlitzes im Ruhezustand zwischen 5/100 mm und 1 mm beträgt.

15. Abgabekopf nach einem der Ansprüche 5 bis 14, **dadurch gekennzeichnet, dass** das Strömungsreduzierungsorgan die Spur (23) einer Einspritzstelle in einer Ebene aufweist, die durch die Mitte des Schlitzes verläuft und mit der zur Längsrichtung des Schlitzes senkrechten Mittelebene (M) einen Winkel von weniger als oder gleich 30° bildet.

16. Abgabekopf nach einem der Ansprüche 5 bis 15, **dadurch gekennzeichnet, dass** das Strömungsreduzierungsorgan die Spur von zwei Einspritzstellen in einer Ebene aufweist, die durch die Mitte des Schlitzes verläuft und mit der zur Längsrichtung des Schlitzes senkrechten Mittelebene (M) einen Winkel von weniger als oder gleich 30° bildet, wobei diese Einspritzstellen zu beiden Seiten des Schlitzes angeordnet sind.

17. Abgabekopf nach einem der Ansprüche 5 bis 16, **dadurch gekennzeichnet, dass** er einen verschwenkbaren Deckel (8) besitzt, der auf seiner Innenseite mit einem glatten Buckel (40) versehen ist, der dafür ausgelegt ist, mit dem Strömungsreduzierungsorgan (20) in Kontakt zu kommen, wenn der Deckel geschlossen ist.

18. Abgabekopf nach Anspruch 17, **dadurch gekennzeichnet, dass** das Strömungsreduzierungsorgan (20) und der Deckel von verschiedenen Farben sind, und dadurch, dass der Deckel aus einem durchscheinenden Kunststoff hergestellt ist, der das Strömungsreduzierungsorgan erscheinen lässt, wenn der Deckel geschlossen ist.

19. Vorrichtung zur Verpackung und Abgabe eines fließfähigen Produkts, umfassend einen Behälter und einen Abgabekopf nach einem der Ansprüche 5 bis 18.
